# EUROPÄISCHE PATENTSCHRIFT

(11) **EP 2 480 463 B1**
(45) Veröffentlichungstag und Bekanntmachung des Hinweises auf die Patenterteilung: **18.04.2018**
(21) Anmeldenummer: 09760747.7
(22) Anmeldetag: 20.11.2009
(51) Int. Cl.: B65D 41/00, B65D 53/00, B67B 3/00

(54) **PVC-FREIE DICHTUNGEN FÜR DREHKRONENKORKEN ("TWIST CROWNS")**
PVC-FREE SEALS FOR TWIST CROWNS
JOINTS SANS PVC POUR CAPSULES À REBORD DÉVISSABLES ("TWIST CROWNS")

(43) Veröffentlichungstag der Anmeldung: 01.08.2012
(73) Patentinhaber: ACTEGA DS GmbH, 28219 Bremen (DE)
(72) Erfinder: MÄNGEL, Dany, 27239 Twistringen (DE); EICHLER, Waldemar, 28777 Bremen (DE)
(74) Vertreter: Maiwald, Walter
(86) Internationale Anmeldenummer: PCT/EP2009/008274
(87) Internationale Veröffentlichungsnummer: WO 2011/060804

(56) Entgegenhaltungen:
- EP-A1- 1 116 747
- EP-A1- 1 816 086
- EP-A1- 1 894 974
- EP-A1- 2 058 379
- EP-A2- 0 250 057
- US-A- 5 060 818
- US-A1- 2006 229 402
- US-B2- 7 056 971
- Anonymous: "Physical Properties: Compression Set", , 8 March 2006 (2006-03-08), XP055181914, Retrieved from the Internet: URL:http://rlhudson.com/Shaft%20Seal%20Boo k/select-physical8.html [retrieved on 2015-04-09]
- "Evaluation of Parker's Compound NB107-9", , 18 May 2001 (2001-05-18), XP055181919, Retrieved from the Internet: URL:http://www.parker.com/literature/O-Rin g Division Literature/nb107.pdf [retrieved on 2015-04-09]

## Beschreibung

Die Erfindung betrifft Drehkronenkorken ("twist crowns") mit einer PVC-freien Dichtungseinlage, die ein Polymercompound umfasst.

Drehkronenkorken stellen gegenüber den normalen Kronenkorken ("pry-off") für den Verbraucher einen Vorteil dar, da Drehkronenkorken ohne Werkzeug geöffnet werden können. In einigen Ländern haben sich die Drehkronenkorken über die Jahre zu der Standardlösung entwickelt, so daß in diesen Ländern z.B. Flaschenbier ohne Drehkronenkorken nicht mehr vorstellbar ist, und längst eine Grunderwartung des Verbrauchers darstellt. Das einfache Öffnen des Drehkronenkorken ohne ein Werkzeug gebrauchen zu müssen ist ein wesentlicher Vorteil von Drehkronenkorken gegenüber herkömmlichen Kronenkorken.

In der Industrie werden Dichtungen für Drehkronenkorken mit PVC-haltigen Compounds hergestellt. Diese Dichtungen für Drehkronenkorken, bestehen gewöhnlich aus PVC im allgemeinen und Weich-PVC im besonderen, da nur so die strengen Anforderungen an die Dichtigkeit als auch die Öffnungskräfte sichergestellt werden können. Die Dichtigkeit der Drehkronenkorken muß einerseits eine Leckage (also das Auslaufen) des Füllinhaltes verhindern, was vor allem bei unter Druck stehenden Flüssigkeiten, wie z.B. Bier eine nicht triviale Aufgabe ist, und andererseits eine Kontamination des Füllinhaltes vermeiden. Zusätzlich muss die Dichtung, wie schon erwähnt auch den Öffnungskräften standhalten. Es muß also gewährleistet sein, dass sich der Behälter durch eine Drehbewegung des Drehkronenkorkens öffnen lässt, sich aber nicht von alleine öffnet.

Es ist jedoch unerwünscht, PVC-haltige Compounds in Dichtungen für Gefäßverschlüsse einzusetzen, sei es in der Form von PVC im Allgemeinen und Weich-PVC im Besonderen. Bei der üblichen Verbrennung von Haushaltsabfall entstehen aus Halogenkunststoffen säurehaltige Gase, deren Entweichen in die Atmosphäre schädlich ist. Zudem stören schon geringe Mengen PVC das werkstoffliche Recycling von Kunststoffabfällen. Außerdem erfordern solche PVCbasierenden Dichtungselemente den Einsatz von Weichmachern, die aus gesundheitlichen Gründen ebenfalls bedenklich sind.

Es besteht daher ein Bedarf für Drehkronenkorkenverschlüsse, die eine Dichtungseinlage auf Polymerbasis aufweisen, welche nicht auf PVC basiert. Bei all diesen Charakteristiken müssen die Dichtungen auch noch den oben genannten Anforderungen hinsichtlich der eventuellen Migration chemischer Bestandteile entsprechen.

Es ist daher eine wesentliche Aufgabe der Erfindung, eine zur Herstellung für Drehkronenkorkenverschlüsse geeignete Dichtungseinlage anzugeben, welche es ermöglicht, den Gefäßverschluss mit einem Dichtungselement auf Polymerbasis zu versehen, welches kein PVC enthält und den gesetzlichen Vorschriften hinsichtlich der Migration von Verpackungskomponenten entspricht.

Es gehört weiterhin zu den Aufgaben der Erfindung, entsprechende Gefäßverschlüsse zu definieren.

Nun hat sich überraschend herausgestellt, dass bestimmte Compounds bei einer geeigneten Shore A-Härte, und basierend auf TPE, LLDPE, LDPE und CO-PP sowie Weißöl, diese Anforderungen nachhaltig erfüllen.

Die erfindungsgemäßen Drehkronenkorken genügen den ausgeführten Anforderungen an die Dichtigkeit und die Öffnungskräfte ohne dass sie PVC-haltige Compounds enthalten.

Zur Lösung der Aufgabe ist ein erfindungsgemäßer Drehkronenkorken mit den Merkmalen ausgestattet, die im Anspruch 1 definiert sind.

Außerdem umfasst die Erfindung die Verwendung besonders geeigneter Polymercompounds für die Erzeugung solcher Drehkronenkorken.

Bei den erfindungsgemäßen Drehkronenkorken ist das Dichtungselement in ähnlicher Weise als Einlage auf der Innenfläche des Gefäßverschlusses ausgebildet, wie dies bei den bekannten PVC-haltigen Drehkronenkorken auch der Fall ist.

Spezifischer handelt es sich bei der Erfindung grundsätzlich um Drehkronenkorken aus Metall wie z.B. Aluminium für Gefäße zur Aufnahme von Getränken, die vor der Migration von Verpackungsbestandteilen entsprechend den gesetzlichen Vorschriften geschützt werden müssen.

Grundsätzlich wird bei deren Herstellung von einem Gefäßverschluss-Rohling aus Metall ausgegangen, der vorzugsweise zunächst auf seiner Innenseite mit einem geeigneten Primer vorbehandelt wird. Insbesondere eignet sich hierfür ein TPE-Lack, etwa der von der Firma Rhenania (wie z.B. HLD 79) entwickelte Primer-Lack, auf dem die erfindungsgemäß am meisten bevorzugten Compounds besonders gut haften. Bevorzugt werden Bisphenol-A- freie Lacke.

Alternativ dazu kann man eine geeignete Primerbeschichtung durch Laminierung, Kaschierung oder eventuell auch durch Co-Extrusion aufbringen.

Um einen dichten Verschluss des Gefäßes zu gewährleisten, verfügen die erfindungsgemäßen Drehkronenkorken über eine Dichtungseinlage aus einem Compound, das den weiter oben genannten Anforderungen hinsichtlich Verarbeitkeit einerseits und Dichtungseigenschaften andererseits entspricht und das auch die gesetzlichen Anforderungen hinsichtlich der Migration von Verpackungskomponenten erfüllt.

In besonders bevorzugten Ausführungsformen der Erfindung eignet sich der Gefäßverschluss für eine Sterilisierung.

In bevorzugten Ausführungsformen enthält das Compound nicht mehr als 10 %, vorzugsweise nicht mehr als 7 %, insbesondere nicht mehr als 4 % und besonders bevorzugt nicht mehr als 1 % von Gleitmitteln.

Erfindungsgemäß enthält das Compound zwischen 10 % bis 40 % Thermoplastische Elastomere (TPE) basierend auf Styrol-Ethylen-Butylen-Styrol (SEBS), vorzugsweise enthält das Material zwischen 20 % bis 30 % von TPE basierend auf SEBS, und
zwischen 10 % bis 30 % Linear Low Density Polyethylen, LLDPE, vorzugsweise enthält das Material zwischen 15 % bis 25 % LLDPE, und
zwischen 5 % bis 25 % Low Density Polyethylen, LDPE, vorzugsweise enthält das Material zwischen 10 % bis 20 % LDPE, und
zwischen 2 % bis 20 % Copolymer, bestehend aus Polypropylen (PP) und Polyethylen (PE), vorzugsweise enthält das Material zwischen 5 % bis 15 % Copolymer.

Vorzugsweise enthält das Compound zwischen 20 % bis 45 % Medizinisches Weißöl, und speziell enthält das Material zwischen 30 % bis 40 % Medizinisches Weißöl.

Weiterhin wird es bevorzugt, dass das Material der Dichtungseinlage keine typischen Weichmacher, insbesondere Ester-basierte Weichmacher wie Phthalate enthält.

Erfindungsgemäß kann ein besonders bevorzugtes Compound ein thermoplastisches Elastomer basierend auf SEBS mit einem gebundenen Styrolanteil von 31% im Bereich von 24%-28%, ein Polyolefin, wie z.B. ADFLEX C 200 F im Bereich von 6%-10%, ein LDPE Polyethylen, wie z.B LDPE MFI 2 im Bereich von 10%-14%, Gleitmittel bestehend aus Erucasäureamid, wie z.B. Finawax E im Bereich von 0,4%-0,6%, Pigmente wie z.B. Titaniumdioxid im Bereich von 0,2%-0,4%, Antioxidans, wie z.B. IRGANOX 1010 im Bereich von 0%-0,2%, Stabilisatoren, wie z.B. IRGAFOS 168 im Bereich von 0%-0,2%, Weißöl im Bereich von 33%-37% und ein LLDPE Polyethylen, wie z.B. SABIC 118N im Bereich von 16%-20%, enthalten.

Eine beispielhafte Rezeptur umfasst:

| | |
|---|---|
| Polyolefin: | 8% |
| LDPE Polyethylen: | 12% |
| Erucasäureamid: | 0,5% |
| Antioxidans: | 0,1% |
| Stabilisator: | 0,1% |
| SEBS (gebd. Styrolanteil 31%): | 26% |
| Weißöl Visk. 70: | 35% |
| LLDPE Polyethylen: | 18% |

Erfindungsgemäß hat das genannte Material eine Shore A Härte von 50 bis 90, bevorzugt eine Shore A Härte von 60 bis 80 und besonders bevorzugt eine Shore A Härte von 65 bis 75 und einen Druckverformungsrest (DVR) analog ASTM D395-97 Methode B bei 70°C von 30-90%.

Wahlweise können der Rezeptur des Compounds auch Pigmente, vorzugsweise anorganische Pigmente zugesetzt werden, um die Migration nahezu auszuschließen.

Es hat sich gezeigt, dass dem Polymercompound andere Additive wie Wachse, und Silikone zugesetzt werden können, um z.B. die Verarbeitung und die Gebrauchseigenschaften zu verbessern.

Die Ausbildung von Dichtungseinlagen aus den erfindungsgemäßen Compounds in geeigneten Drehkronenkork-Rohlingen erfolgt in bekannter Weise.

Durch die Verwendung des genannten Polymermaterials wird erfindungsgemäß erreicht, dass die solchermaßen hergestellte Dichtungseinlagen für Drehkronenkorken nicht nur unproblematisch hergestellt werden können und die Dichtungs- und die Öffnungseigenschaften aufweist, die eingangs beschrieben worden sind. Darüber hinaus sind solche Gefäßverschlüsse auch pasteurisierbar, und sie erfüllen die genannten europarechtlichen Vorschriften hinsichtlich der Migration von Bestandteilen des Polymermaterials in das Getränk oder Nahrungsmittel, welche im erfindungsgemäß verschlossenen Gefäß enthalten sind.

## Patentansprüche

1. Drehkronenkorken mit einer PVC-freien Dichtungseinlage, die ein Polymercompound umfasst, **dadurch gekennzeichnet, dass** die Shore A Härte des Polymercompounds zwischen 50 und 90 liegt und das Polymercompound beim Druckverformungstest analog ASTM D395-97 Methode B bei 70 °C einen Druckverformungsrest (DVR) von 30-90% zeigt und das Polymercompound so zusammengesetzt ist, dass es eine Kombination von TPE, Polyolefin und Weißöl umfasst, wobei das Compound
a) zwischen 10 % bis 40 % TPE basierend auf SEBS,
b) zwischen 10 % bis 30 % LLDPE,
c) zwischen 5 % bis 25 % LDPE und
d) zwischen 2 % bis 20 % Copolymer, bestehend aus Polypropylen (PP) und Polyethylen (PE), enthält.

2. Drehkronenkorken nach Anspruch 1, **dadurch gekennzeichnet, dass** das Compound nicht mehr als 10 %, vorzugsweise nicht mehr als 7 %, insbesondere nicht mehr als 4 % und besonders bevorzugt nicht mehr als 1 % an Gleitmitteln enthält.

3. Drehkronenkorken nach Anspruch 1 oder 2, **dadurch gekennzeichnet, dass** das Compound zwischen 20 % bis 30 % von TPE basierend auf SEBS enthält.

4. Drehkronenkorken nach Ansprüchen 1 bis 3, **dadurch gekennzeichnet, dass** das Compound zwischen 15 % bis 25 % LLDPE, enthält.

5. Drehkronenkorken nach Ansprüchen 1 bis 4, **dadurch gekennzeichnet, dass** das Compound, zwischen 10 % bis 20 % LDPE, enthält.

6. Drehkronenkorken nach Ansprüchen 1 bis 5, **dadurch gekennzeichnet, dass** das Compound zwischen 5 % bis 15 % Copolymer, bestehend aus Polypropylen (PP) und Polyethylen (PE), enthält.

7. Drehkronenkorken nach Anspruch 1, **dadurch gekennzeichnet, dass** das Compound mindestens 20 % wenigstens eines Block-Copolymers enthält, wobei das Block-Copolymer vorzugsweise ein Interpolymer von Ethylen mit mindestens einem C₃-C₂₀-alpha-Olefin oder ein Copolymer von Ethylen mit einem C₃-C₂₀-alpha-Olefin, gegebenenfalls in Kombination mit anderen ungesättigten Monomeren, ist.

8. Drehkronenkorken nach Ansprüchen 1 bis 6, **dadurch gekennzeichnet, dass** das Compund bevorzugt zwischen 0 % und 50 %, vorzugsweise zwischen 20% bis 45% Medizinisches Weißöl und besonders bevorzugt 30% bis 40% Medizinisches Weißöl, enthält.

9. Drehkronenkorken nach Anspruch 1, **dadurch gekennzeichnet, dass** das Block-Copolymer eine Dichte von 0,85 bis 01,1 g/cm³ aufweist und vorzugsweise einen Schmelzindex (MFI) von 0,01 g/10 min bis 1000 g/10 min insbesondere einen MFI von 1 g/10 min bis 100 g/10 min bei einer Auflage von 5kg bei 190 °C aufweist.

10. Drehkronenkorken nach einem der Ansprüchen 1 bis 7, welches Additive wie Wachse und Silikone enthält.

11. Drehkronenkorken nach Ansprüchen 1 bis 10, **dadurch gekennzeichnet, dass** das Compound eine Shore-A Härte von 60-80, besonders bevorzugt eine Shore-A Härte von 65-75 aufweist.

12. Drehkronenkorkendichtungseinlage, ein Polymercompound gemäß einem der Ansprüche 1 bis 10 umfassend.

13. Verwendung eines Polymercompounds gemäß einem der Ansprüche 1 bis 10 zur Herstellung einer Dichtungseinlage für einen Drehkronenkorken.

## Claims

1. Twist crown cap comprising a PVC-free sealing insert which comprises a polymer compound, **characterised in that** the Shore A hardness of the polymer compound is between 50 and 90 and the polymer compound exhibits a compression set of 30-90% in the compressive deformation test analogous to ASTM D395-97 Method B at 70 °C, and the polymer compound is composed so that it comprises a combination of TPE, polyolefin and white oil, wherein the compound comprises
a) between 10% to 40% TPE based on SEBS,
b) between 10% to 30% LLDPE,
c) between 5% to 25% LDPE and
d) between 2% to 20% copolymer consisting of polypropylene (PP) and polyethylene (PE).

2. Twist crown cap according to claim 1, **characterised in that** the compound comprises not more than 10%, preferably not more than 7%, more particularly not more than 4% and even more preferably not more than 1% of lubricants.

3. Twist crown cap according to claim 1 or 2, **characterised in that** the compound comprises between 20% to 30% of TPE based on SEBS.

4. Twist crown cap according to claims 1 to 3, **characterised in that** the compound comprises between 15% to 25% LLDPE.

5. Twist crown cap according to claims 1 to 4, **characterised in that** the compound comprises between 10% to 20% LDPE.

6. Twist crown cap according to claims 1 to 5, **characterised in that** the compound comprises between 5% to 15% copolymer consisting of polypropylene (PP) and polyethylene (PE).

7. Twist crown cap according to claim 1, **characterised in that** the compound comprises at least 20% of at least one block copolymer, wherein the block copolymer is preferably an interpolymer of ethylene and at least one C₃-C₂₀ alpha-olefin or a copolymer of ethylene and one C₃-C₂₀ alpha-olefin, possibly in combination with other unsaturated monomers.

8. Twist crown cap according to claims 1 to 6, **characterised in that** the compound comprises preferably between 0% and 50%, preferably between 20% to 45% medicinal white oil, and particularly preferred 30% to 40% medicinal white oil.

9. Twist crown cap according to claim 1, **characterised in that** the block copolymer has a density of 0.85 to 01.1 g/cm³ and preferably a melt flow index (MFI) of 0.01 g/10 min to 1000 g/10 min, in particular an MFI of 1 g/10 min to 100 g/10 min at 190 °C and a gravimetric load of 5 kg.

10. Twist crown cap according to any of the claims 1 to 7, which comprises additives such as waxes and silicones.

11. Twist crown cap according to claims 1 to 10, **characterised in that** the compound has a Shore A hardness of 60-80 and particularly preferred a Shore A hardness of 65-75.

12. Twist crown cap sealing insert comprising a polymer compound according to any of the claims 1 to 10.

13. Use of a polymer compound according to any of the claims 1 to 10 for the production of a sealing insert for a twist crown cap.

## Revendications

1. Capsule dévissable avec un insert d'étanchéité exempt de PVC qui comprend un composite polymère, **caractérisée en ce que** la dureté Shore A du composite polymère est comprise entre 50 et 90 et que le composite polymère présente, lors d'un essai de déformation sous pression analogue à ASTM D395-97, méthode B, à 70 °C, une déformation rémanente après compression (DVR) comprise entre 30 % et 90 % et le composite polymère est composé de telle sorte qu'il comprend une combinaison de TPE, de polyoléfine et d'huile blanche, le composite contenant
a) entre 10 % et 40 % de TPE basé sur du SEBS,
b) entre 10 % et 30 % de LLDPE,
c) entre 5 % et 25 % de LDPE et
d) entre 2 % et 20 % d'un copolymère constitué de polypropylène (PP) et de polyéthylène (PE).

2. Capsule dévissable selon la revendication 1, **caractérisée en ce que** le composite ne contient pas plus de 10 %, de préférence pas plus de 7 %, en particulier pas plus de 4 % et de manière particulièrement préférée pas plus de 1 % d'agents antifriction.

3. Capsule dévissable selon la revendication 1 ou 2, **caractérisée en ce que** le composite contient entre 20 % et 30 % de TPE basé sur du SEBS.

4. Capsule dévissable selon les revendications 1 à 3, **caractérisée en ce que** le composite contient entre 15 % et 25 % de LLDPE.

5. Capsule dévissable selon les revendications 1 à 4, **caractérisée en ce que** le composite contient entre 10 % et 20 % de LDPE.

6. Capsule dévissable selon les revendications 1 à 5, **caractérisée en ce que** le composite contient entre 5 % et 15 % d'un copolymère constitué de polypropylène (PP) et de polyéthylène (PE).

7. Capsule dévissable selon la revendication 1, **caractérisée en ce que** le composite contient au moins 20 % d'au moins un copolymère séquencé, le copolymère séquencé étant de préférence un interpolymère d'éthylène avec au moins une alpha-oléfine en C₃ à C₂₀ ou un copolymère d'éthylène avec une alpha-oléfine en C₃ à C₂₀, le cas échéant en combinaison avec d'autres monomères insaturés.

8. Capsule dévissable selon les revendications 1 à 6, **caractérisée en ce que** le composite contient de préférence entre 0 % et 50 %, davantage de préférence entre 20 % et 45 % d'huile blanche médicale et particulièrement de préférence de 30 % à 40 % d'huile blanche médicale.

9. Capsule dévissable selon la revendication 1, **caractérisée en ce que** le copolymère séquencé présente une densité de 0,85 à 01,1 g/cm³ et de préférence un indice de fluidité (MFI) de 0,01 g/10 min à 1000 g/10 min, en particulier un MFI de 1 g/10 min à 100 g/10 min sous une charge de 5 kg à 190 °C.

10. Capsule dévissable selon l'une des revendications 1 à 7, laquelle contient des additifs comme des cires et des silicones.

11. Capsule dévissable selon les revendications 1 à 10, **caractérisée en ce que** le composite présente une dureté Shore A de 60 à 80, particulièrement de préférence une dureté Shore A de 65 à 75.

12. Insert d'étanchéité de capsule dévissable comprenant un composite polymère selon l'une des revendications 1 à 10.

13. Utilisation d'un composite polymère selon l'une des revendications 1 à 10 pour fabriquer un insert d'étanchéité pour une capsule dévissable.
